# EUROPÄISCHE PATENTANMELDUNG

(11) **EP 1 691 125 A1**
(43) Veröffentlichungstag der Anmeldung: **16.08.2006**
(21) Anmeldenummer: 05021827.0
(22) Anmeldetag: 06.10.2005
(51) Int. Cl.: F16L 37/098, F16L 37/091

(54) **Kupplungseinrichtung**

(30) Priorität: 10.02.2005 DE 202005002159 U
(71) Anmelder: VERITAS AG, 63571 Gelnhausen (DE)
(72) Erfinder: Müller, Niels, 63571 Gelnhausen (DE); Schirmer, Bianca, 63589 Linsengericht/Altenhasslau (DE)
(74) Vertreter: Grünecker, Kinkeldey, Stockmair & Schwanhäusser Anwaltssozietät

(57) **Zusammenfassung**

Die vorliegende Erfindung bezieht sich auf eine Kupplungseinrichtung mit einem Gehäuse (2), das eine Aufnahme (4) aufweist, in die ein Endabschnitt (16) einer vorzugsweise starren Rohrleitung (14), die wenigstens einen radial gegenüber der Rohrleitung vorstehen, vorzugsweise in Umfangsrichtung der Rohrleitung umlaufenden Sicherungsbund (15) aufweist, in einer Einsteckrichtung einsteckbar ist und mit einer Rückhalteeinrichtung (8), mit der die eingesteckte Rohrleitung entgegen der Einsteckrichtung sicherbar ist. Um eine solche Kupplungseinrichtung zu verbessern, wird erfindungsgemäß vorgeschlagen, dass eine Sicherungseinrichtung (17) vorhanden ist, die einen Befestigungsabschnitt (18) mit dem die Sicherungseinrichtung am Gehäuse der Kupplungseinrichtung befestigbar ist, und einen Sicherungsabschnitt (24) aufweist und der Sicherungsabschnitt (24) bei eingesteckter Rohrleitung (14) von dem Sicherungsbund (15) entgegen der Einsteckrichtung beabstandet ist und durch Herausziehen der Rohrleitung (14) mit dem Sicherungsbund (15) in Eingriff bringbar ist.

## Beschreibung

Die vorliegende Erfindung bezieht sich auf eine Kupplungseinrichtung mit einem Gehäuse, dass eine Aufnahme aufweist, in die ein Endabschnitt einer vorzugsweise starren Rohrleitung, die wenigstens einen radial gegenüber der Rohrleitung vorstehenden, vorzugsweise in Umfangsrichtung der Rohrleitung umlaufenden Sicherungsbund aufweist, in einer Einsteckrichtung einsteckbar ist und mit einer Rückhalteeinrichtung, mit der die eingesteckte Rohrleitung entgegen der Einsteckrichtung sicherbar ist.

Derartige Kupplungseinrichtungen sind aus dem Stand der Technik allgemein bekannt. Sie wird entweder für starre oder aber flexible Rohrleitungen eingesetzt. Besonders bewährt haben sich diese Kupplungseinrichtungen bei Rohrleitungen, die in Kraftfahrzeugen als Kraftstoffleitungen eingesetzt werden. Diese Rohrleitungen sind üblicherweise starr und bestehen aus Metall. An ihrem Endabschnitt verfügen diese Rohrleitungen über einen radial vorstehenden, in Umfangsrichtung ringförmig umlaufenden Bund. Es ist jedoch auch denkbar, dass der Bund nicht vollständig, sondern nur teilweise oder abschnittsweise sich in Umfangsrichtung der Rohrleitung erstreckt. Das Gehäuse ist im Wesentlichen zylindrisch und verfügt über eine Aufnahme, in die der Endabschnitt der Rohrleitung einsteckbar ist. In der Aufnahme befinden sich Sicherungsmittel, wie z. B. Federzungen, die durch Einstecken der Rohrleitung auseinandergespreizt werden und bei eingesteckter Rohrleitung den Sicherungsbund der Rohrleitung entgegen ihrer Einsteckrichtung gegen Herausziehen sichern. Derartige Kupplungseinrichtungen haben sich als zuverlässig und stabil erwiesen. In jüngerer Zeit gab es jedoch zunehmend Forderungen, die Sicherheit derartiger Kupplungseinrichtungen insbesondere im Falle eines Unfalls zu verbessern, um ein ungewolltes Auslaufen von Kraftstoff und die sich daraus ergebende mögliche Brandgefährdung zu vermeiden.

Aufgabe der Erfindung ist es daher, eine Kupplungseinrichtung der eingangs genannten Art zu verbessern, so dass eine sichere Verbindung zwischen einer Rohrleitung und der Kupplungseinrichtung besteht und insbesondere im Falle eines Unfalls des Kraftfahrzeugs ein Auslaufen von Kraftstoff wirksam verhindert werden kann. Darüber hinaus soll sich diese Verbesserung einfach und Kostengünstig erzielen lassen.

Die Aufgabe wird erfindungsgemäß gelöst durch eine Kupplungseinrichtung der eingangs genannten Art, bei der eine Sicherungseinrichtung vorhanden ist, die einen Befestigungsabschnitt, mit dem die Sicherungseinrichtung an der Kupplungseinrichtung befestigt ist, und einen Sicherungsabschnitt aufweist und der Sicherungsabschnitt bei eingesteckter Rohrleitung von dem Sicherungsbund entgegen der Einsteckrichtung beabstandet ist und durch Herausziehen der Rohrleitung mit dem Sicherungsbund in Eingriff bringbar ist.

Diese Lösung ist einfach und hat den Vorteil, dass eine zusätzliche zweite Sicherung vorhanden ist, die gerade im Falle eines Unfalls ein Auslaufen von Kraftstoff wirksam verhindern kann. Beim normalen Betrieb befindet sich die Kupplungseinrichtung in bekannter Weise mit der Rohrleitung in Eingriff. Sollte nun durch große Krafteinwirkung auf die Kupplungseinrichtung, wie im Falle eines Unfalls, die Rohrleitung entgegen ihrer Einsteckrichtung aus ihrer Aufnahme herausgerissen werden, gelangt die Sicherungseinrichtung mit der Rohrleitung in Eingriff. Dadurch lässt sich verhindern, dass die Kupplungseinrichtung und die Rohrleitung voneinander getrennt werden.

In einer vorteilhaften Weiterbildung kann die Sicherungseinrichtung lösbar mit dem Gehäuse verbunden sein. Dies bietet sich insbesondere bei Nachrüstlösungen an. Zudem ermöglicht das lösbare Anbringen ein Entfernen der Sicherungseinrichtung, so dass nach einem Unfall oder dergleichen ein gezieltes Trennen von Rohrleitung und Kupplungseinrichtung möglich ist.

Für Nachrüstlösungen kann es sich insbesondere als vorteilhaft erweisen, wenn die Sicherungseinrichtung über den Befestigungsabschnitt mit dem Gehäuse verrastbar ist. Durch eine solche Verrastung kann eine einfache und kostengünstige Montage erfolgen.

Dabei kann es sich als vorteilhaft erweisen, wenn der Befestigungsabschnitt wenigstens eine zumindest abschnittsweise das Gehäuse in Umfangsrichtung umgreifende elastische Haltezunge aufweist, über die der Befestigungsabschnitt mit dem Gehäuse verrastbar ist. Auch dadurch lässt sich eine einfache und wirkungsvolle Verbindung zwischen dem Befestigungsabschnitt und dem Gehäuse erzielen.

Um die Sicherungsvorrichtung auch nach erfolgter Montage von Rohrleitung und Kupplungseinrichtung anbringen zu können, kann es sich als vorteilhaft erweisen, wenn der Befestigungsabschnitt im Wesentlichen in radialer Richtung des Gehäuses mit dem Gehäuse verrastbar ist.

In einer vorteilhaften Weiterbildung der Erfindung kann der Sicherungsabschnitt wenigstens einen Sicherungsbügel aufweisen, der sich zumindest abschnittsweise zwischen der Rohrleitung und dem Außenumfang des Sicherungsbundes der Rohrleitung erstreckt. Auf diese Weise kann ein Formschluss zwischen Sicherungsabschnitt und Sicherungsbund erzeugt werden.

Um eine symmetrische Krafteinleitung zu ermöglichen, kann es sich als vorteilhaft erweisen, wenn zwei Sicherungsbügel auf einander gegenüberliegenden Seiten vorgesehen sind.

Zudem kann es sich als günstig erweisen, wenn die Sicherungsbügel elastisch sind. Dann sind sie in der Lage auch größere Stöße zu absorbieren, wie sie gerade bei einem Unfall auftreten können.

Dabei kann es sich als vorteilhaft erweisen, wenn die Sicherungsbügel als elastische Federzungen ausgebildet sind, und beim Einstecken des Rohres in Einsteckrichtung durch den Sicherungsbund von einer Sicherungsstellung, in der der Sicherungsbund entgegen der Einsteckrichtung mit den Sicherungsbügeln in Eingriff bringbar ist, in eine Durchlassstellung überführbar ist, so das die Rohrleitung in die Aufnahme einsteckbar ist. Dadurch kann die Sicherungseinrichtung auch vor der Montage der Rohrleitung am Gehäuse montiert werden.

Von Vorteil kann es dabei sein, wenn die Sicherungseinrichtung aus federelastischem Material, vorzugsweise Federstahl, besteht. Die Sicherungseinrichtung kann dadurch einfach und kostengünstig bei ausreichender Festigkeit und geringem Gewicht realisiert werden.

In einer vorteilhaften der Erfindung kann das Gehäuse einen die Aufnahme aufweisenden Gehäuseabschnitt größeren Außendurchmessers und einen Gehäuseabschnitt geringeren Außendurchmessers aufweisen. Dadurch kann der Bauraum des Gehäuses kompakter gestaltet werden.

Weiterhin kann es sich als günstig erweisen, wenn der Gehäuseabschnitt größeren Außendurchmessers dem Gehäuseabschnitt geringeren Außendurchmessers benachbart angeordnet ist. Dadurch kann die Geometrie des Gehäuses auch zum axialen Festlegen der Sicherungseinrichtung verwendet werden.

Von Vorteil kann es dabei sein, wenn die Sicherungseinrichtung einen zweiten Befestigungsabschnitt aufweist, der am Gehäuse angebracht ist. Dadurch lässt sich die Verbindung zwischen Sicherungseinrichtung und Gehäuse verbessern.

Um eine axiale Festlegung der Sicherungseinrichtung am Gehäuse in zumindest einer axialen Richtung des Gehäuses zu erzielen, kann die erste Befestigungsabschnitt am Gehäuseabschnitt kleineren Außendurchmessers und der zweite Befestigungsabschnitt am Gehäuseabschnitt größeren Außendurchmessers angeordnet sein.

Dabei kann es sich als vorteilhaft erweisen, wenn der erste und der zweite Befestigungsabschnitt über wenigstens einen Haltesteg miteinander verbunden sind, der sich am Gehäuse entgegen der Einsteckrichtung abstützt.

Ferner kann es sich als günstig erweisen, wenn der zweite Befestigungsabschnitt einen Stützabschnitt aufweist, die das Gehäuse formschlüssig hintergreift, so dass sich die Sicherungseinrichtung in Einsteckrichtung am Gehäuse abstützt. Auch dadurch kann auf einfache Weise eine axiale Festlegung der Sicherungseinrichtung am Gehäuse erzielt werden.

Darüber hinaus wird noch eine erfindungsgemäße Kupplungseinrichtung mit einer Rohrleitung beansprucht, wobei ein zylindrischer Endabschnitt der Rohrleitung größer als die axiale Bewegung der Rohrleitung zwischen eingesteckter Stellung und Sicherungsstellung ist. Auf diese Weise lässt sich sicherstellen, dass beim Überführen von der eingesteckten Stellung aufgrund übergroßer Krafteinwirkung und Versagen der Rückhalteeinrichtung in die Sicherungsstellung es möglich ist, mit einem einzigen Dichtelement in beiden Stellung eine Abdichtung zu gewährleisten. Die Verwendung mehrerer axial beabstandeter Dichtungen oder nebeneinander angeordneter Dichtungen kann die Dichtwirkung natürlich noch verbessert werden.

Nachfolgend wird die Wirkungsweise der Erfindung näher erläutert.

### Es zeigen:

- Fig. 1: die Kupplungseinrichtung mit eingesteckter Rohrleitung und
- Fig. 2: die Kupplungseinrichtung aus Figur 3 mit teilweise herausgezogener Rohrleitung.
- Fig. 3: eine Seitenansicht der erfindungsgemäßen Sicherungseinrichtung;
- Fig. 4: eine perspektivische Ansicht der Sicherungseinrichtung aus Figur 3;

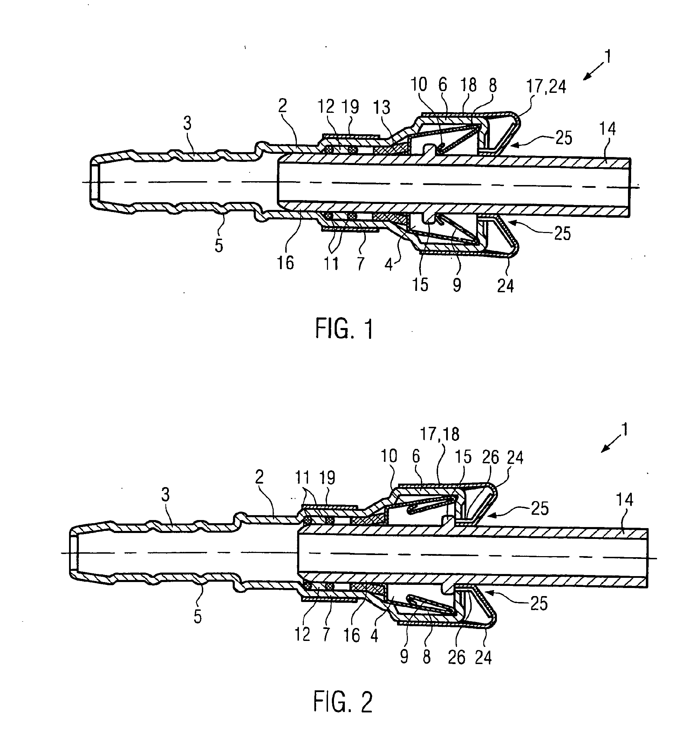

In Figur 1 ist die erfindungsgemäße Kupplungseinrichtung in einer Schnittansicht dargestellt. Die Kupplungseinrichtung verfügt über ein im Wesentlichen rotationssymmetrisches Gehäuse 2 mit einem Anschlussabschnitt 3 und einer Aufnahme 4. Der Anschlussabschnitt 3 ist im Wesentlichen rohrförmig und mit einer Profilierung 5 in Form umlaufender Vorsprünge versehen. In bekannter Weise kann auf diesen Anschlussabschnitt 3 ein flexibler Schlauch aufgeschoben werden. An dem rohrförmigen Anschlussabschnitt 3 schließt sich die ebenfalls rohrförmige Aufnahme 4 an, wobei die Aufnahme 4 durch einen Gehäuseabschnitt gebildet wird, dessen Außendurchmesser größer als der Außendurchmesser des Anschlussabschnittes 3 ist. Die Außenfläche des Gehäuseabschnittes 6 ist im Wesentlichen zylindermantelförmig. Zwischen dem Anschlussabschnitt 3 und dem Gehäuseabschnitt 6 befindet sind ein weiterer Gehäuseabschnitt 7, dessen Außenfläche ebenfalls im Wesentlichen zylindermantelförmig ist und dessen Außendurchmesser kleiner als der des Gehäuseabschnittes 6 ist.

In der Aufnahme 4 befindet sich in bekannter Weise eine Rasteinrichtung mit flexiblen Rastelementen 9, die gleichmäßig über den Umfang der Rasteinrichtung 5 verteilt sind. Im vorliegenden Ausführungsbeispiel verfügt die Rasteinrichtung über vier Rastelemente. Die Rasteinrichtung ist aus Federstahl hergestellt, so dass Endabschnitte 10 der Rastelemente 9 radial nach außen spreizbar sind. Sie sind jedoch fedemd in die Stellung gemäß Figur 1 vorgespannt. Weiterhin sind innerhalb der rohrförmigen Kupplungseinrichtung zwei O-Ringe 11 und ein dazwischen angeordneter Distanzring 12 vorgesehen. Ferner befindet sich noch ein flexibles Element zwischen der Rasteinrichtung 8 und der Anordnung bestehend aus den beiden O-Ringen und dem Distanzring.

Die Dimensionierung des Distanzrings, der O-Ringe, des flexiblen Elements und der Rasteinrichtung ist einer Weise gewählt, dass eine Rohrleitung 14 in bekannter Weise in die Aufnahme einsteckbar ist. Die Rohrleitung 14 verfügt über einen in Umfangsrichtung umlaufenden Sicherungsbund 15, der radial gegenüber der Außenfläche der übrigen Rohrleitung vorsteht. Die Rohrleitung besteht im vorliegenden Ausführungsbeispiel aus Metall und ist somit starr. Das Gehäuse besteht ebenfalls aus Metall, so dass insgesamt eine starre Verbindung herstellbar ist. Denkbar ist es jedoch auch, anstelle einer starren Rohrleitung aus Metall eine Rohrleitung aus Kunststoff oder aus einem flexiblen Material, wie z. B. einem Elastomer zu verwenden. Der Sicherungsbund 15 ist von einem im Wesentlichen zylindrischen Endabschnitt 16 der Rohrleitung beabstandet. Die Rohrleitung ist einer Einsteckrichtung, also koaxial zur Längsachse des Gehäuses in die Aufnahme des Gehäuses einsteckbar, um dadurch die Konfiguration gemäß Figur 1 einzunehmen. Der Sicherungsbund ist dabei so bemessen, dass er beim Einstecken in der Einsteckrichtung zunächst die Endabschnitte 10 der Rastelemente 9 der Rasteinrichtung 8 radial beiseite drückt und in der montierten Stellung des Rohrs gemäß Figur 1 die Endabschnitte 10 der Rastelemente 9 den Sicherungsbund 15 hintergreifen. Grundsätzlich ist auch denkbar, dass der Sicherungsbund nicht vollständig umläuft, sondern sich nur abschnittsweise in Umfangsrichtung erstreckt.

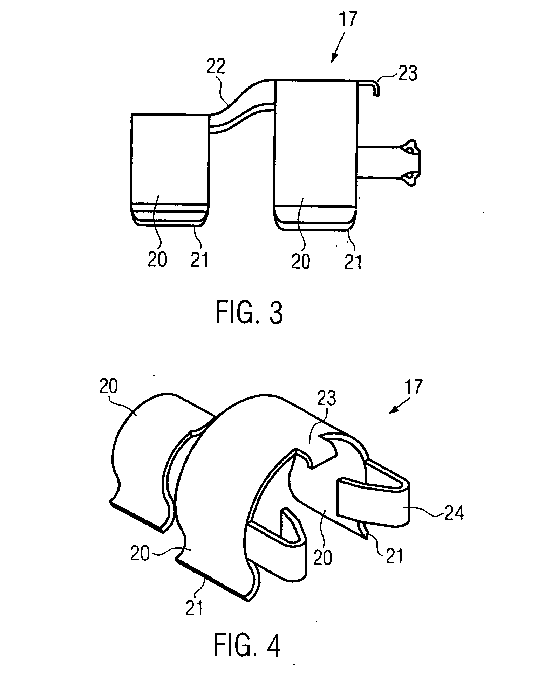

In Figur 3 ist eine Sicherungseinrichtung 17 dargestellt. Die Sicherungseinrichtung 17 besteht aus Federstahl und verfügt über einen ersten Befestigungsabschnitt 18 und einen zweiten Befestigungsabschnitt 19. Die ersten und zweiten Befestigungsabschnitte 18 und 19 verfügen jeweils über flexible Haltezungen 20, die sich bogenförmig erstrecken, so dass sie an die Kontur des Gehäuses 2 angepasst sind. Die Haltezungen 20 verfügen an ihren Endabschnitten über entgegen der Krümmung der Haltezunge nach außen gebogene Griffabschnitte 21. Der erste und der zweite Befestigungsabschnitt 18 und 19 sind über einen Haltesteg 22 miteinander verbunden. Im montierten Zustand der Sicherungseinrichtung gemäß Figur 1 umgreifen die Haltezungen 20 jeweils unter Vorspannung die zugeordneten Gehäuseabschnitte 6 und 7. Darüber hinaus verfügt die Sicherungseinrichtung über einen Stützabschnitt 23, der sich im montierten Zustand der Sicherungseinrichtung radial nach innen erstreckt und das Gehäuse hintergreift, so dass sich die Sicherungseinrichtung in Einsteckrichtung am Gehäuse abstützt.

Weiterhin verfügt die Sicherungseinrichtung über flexible Sicherungsbügel 24. Bei der bevorzugten Ausführungsform sind zwei einander gegenüberliegende Sicherungsbügel 24 vorgesehen. Die Sicherungsbügel sind dabei so gestaltet, dass ihre Endabschnitte 24 einen Abstand zueinander aufweisen, der im Wesentlichen dem Außendurchmesser des zylindrischen Abschnitts der Rohrleitung entspricht. Durch Einstecken der Rohrleitung in die Kupplungseinrichtung in Einsteckrichtung sind die Sicherungsbügel im Bereich ihrer Endabschnitte radial aufweitbar, um dadurch den Durchtritt der Rohrleitung mit dem Sicherungsbund in das Gehäuse der Kupplungseinrichtung 1 zu ermöglichen. Die Sicherungsbügel 24 verfügen an ihren Endabschnitten 25 über zumindest abschnittsweise gerade verlaufende Abschnitte 26, die in der Darstellung gemäß Figur 1 im Wesentlichen parallel zur Außenseite der Rohrleitung verlaufen.

Nachfolgend wird die Wirkungs- und Funktionsweise der Erfindung näher erläutert.

Zunächst wird die Sicherungseinrichtung 17 am Gehäuse 2 der Kupplungseinrichtung 1 befestigt. Dazu werden die Haltezungen 20 der ersten und zweiten Befestigungsabschnitte 18 und 19 mit den Gehäuseabschnitten 6 und 7 in Anlage gebracht, wobei zunächst die Griffabschnitte 21 an den Gehäuseabschnitten 6 und 7 anliegen. Durch ein Aufdrücken in radialer Richtung werden die Haltezungen 20 auseinandergespreizt und die Sicherungseinrichtung schnappt auf die Gehäuseabschnitte 6 und 7 auf, so dass die Konfiguration gemäß den Figuren 1 und 2 einnimmt. Die Haltezungen 20 umgreifen dabei abschnittsweise die zugeordneten Gehäuseabschnitte 6 und 7. Durch diese formschlüssige Koppelung der ersten und zweiten Befestigungsabschnitte mit den jeweils zugeordneten Gehäuseschnitten wird die Lage der Sicherungseinrichtung auf dem Gehäuse 2 fixiert. Dadurch, dass der Gehäuseabschnitt 6 einen größeren Außendurchmesser als der Gehäuseabschnitt 7 aufweist, und die beiden Befestigungsabschnitte über den Haltesteg 22 miteinander verbunden sind, ist die Sicherungseinrichtung entgegen der Einsteckrichtung am Gehäuse festgelegt. In Einsteckrichtung stütz sich die Sicherungseinrichtung über den Stützabschnitt 23 ab. Aufgrund ihrer Gestaltung kann die Sicherungseinrichtung 17 entweder vor der Montage der Rohrleitung oder aber auch nach der Montage der Rohrleitung, also als Nachrüstteil am Gehäuse montiert werden. Zudem kann die Sicherungseinrichtung 17 wieder entfernt werden. Dadurch ist ein Austausch der Sicherungseinrichtung z. B. nach einer längeren Betriebsdauer möglich.

Im vorliegenden Ausführungsbeispiel wurde die Sicherungseinrichtung 17 vor der Montage der Rohrleitung 14 montiert. Zur Montage der Rohrleitung 14 wird diese in Einsteckrichtung mit ihrem Endabschnitt in das Gehäuse 2 eingesteckt, wobei der Sicherungsbund 15 bei dieser Bewegung zunächst die Endabschnitte 25 der Sicherungsbügel 24 auseinander drückt. Nach dem Durchwandern der Sicherungsbügel schnappen diese wieder in ihre Ausgangsstellung gemäß Figur 1 zurück. Bei der weitern Bewegung der Rohrleitung in Einsteckrichtung werden als nächstes die Endabschnitte der Rastelemente 10 radial auseinandergedrückt. Wiederum schnappen diese nach dem Durchwandern des Sicherungsbundes in ihre Ausgangsstellung zurück. Die Anordnung aus Kupplungseinrichtung 1 und Rohrleitung 14 nimmt nunmehr die in Figur 1 dargestellte Konfiguration ein. Bei dieser Konfiguration sind die Endabschnitte 10 der Rastelemente 9 und die Endabschnitte 25 der Sicherungsbügel axial voneinander beabstandet. Die Rohrleitung stützt sich dabei entgegen der Einsteckrichtung nur an den Endabschnitte der Rastelemente ab. Die Endabschnitte der Sicherungsbügel befinden sich nicht in Eingriff.

Sollte nun während des Betriebes die Kupplungseinrichtung extremen Belastungen ausgesetzt werden, wie diese z. B. während eines Unfalls auftreten können, ist es denkbar, dass die Rasteinrichtung 8 versagt und die Rohrleitung entgegen der Einsteckrichtung aus dem Gehäuse herausgezogen werden. Dabei gelangt sie mit den Endabschnitten 24 der Sicherungsbügel in Eingriff und stützt sich an diesen ab. Die Sicherungseinrichtung bildet somit eine zweite Sicherung gegen Herausziehen der Rohrleitung aus dem Gehäuse. Aufgrund der Geometrie der Rohrleitung und der Anordnung der Dichtelemente in Form der O-Ringe wird auch bei der Konfiguration, wie sie in Figur 2 dargestellt ist, ein Abdichten gewährleistet. Folglich kann ein Austreten von Kraftstoff oder dergleichen wirksam verhindert werden.

## Patentansprüche

1. Kupplungseinrichtung mit einem Gehäuse (2), das eine Aufnahme (4) aufweist, in die ein Endabschnitt (16) einer vorzugsweise starren Rohrleitung (14), die wenigstens einen radial gegenüber der Rohrleitung vorstehen, vorzugsweise in Umfangsrichtung der Rohrleitung umlaufenden Sicherungsbund (15) aufweist, in einer Einsteckrichtung einsteckbar ist und mit einer Rückhalteeinrichtung (8), mit der die eingesteckte Rohrleitung entgegen der Einsteckrichtung sicherbar ist, **dadurch gekennzeichnet, dass** eine Sicherungseinrichtung (17) vorhanden ist, die einen Befestigungsabschnitt (18) mit dem die Sicherungseinrichtung im Gehäuse der Kupplungseinrichtung befestigbar ist, und einen Sicherungsabschnitt (23) aufweist und der Sicherungsabschnitt bei eingesteckter Rohrleitung von dem Sicherungsbund entgegen der Einsteckrichtung beabstandet ist und durch Herausziehen der Rohrleitung mit dem Sicherungsbund in Eingriff bringbar ist.

2. Kupplungseinrichtung nach Anspruch 1, **dadurch gekennzeichnet, dass** die Sicherungseinrichtung lösbar mit dem Gehäuse verbindbar ist.

3. Kupplungseinrichtung nach Anspruch 1 oder 2, **dadurch gekennzeichnet, dass** die Sicherungseinrichtung über den Befestigungsabschnitt mit dem Gehäuse verrastbar ist.

4. Kupplungseinrichtung nach einem der vorangegangenen Ansprüche, **dadurch gekennzeichnet, dass** der Befestigungsabschnitt wenigstens eine zumindest abschnittsweise das Gehäuse in Umfangsrichtung umgreifende elastische Haltezunge (20) aufweist, über die der Befestigungsabschnitt mit dem Gehäuse verrastbar ist.

5. Kupplungseinrichtung nach einem der vorangegangenen Ansprüche, **dadurch gekennzeichnet, dass** der Befestigungsabschnitt im Wesentlichen in radialer Richtung des Gehäuses mit dem Gehäuse verrastbar ist.

6. Kupplungseinrichtung nach einem der vorangegangenen Ansprüche, **dadurch gekennzeichnet, dass** der Sicherungsabschnitt wenigstens einen Sicherungsbügel (25) aufweist, der sich zumindest abschnittsweise zwischen Rohr und dem Außenumfang des Sicherungsbundes erstreckt.

7. Kupplungseinrichtung nach einem der vorangegangenen Ansprüche, **dadurch gekennzeichnet, dass** zwei Sicherungsbügel auf einander gegenüberliegenden Seiten vorgesehen sind.

8. Kupplungseinrichtung nach einem der vorangegangenen Ansprüche, **dadurch gekennzeichnet, dass** die Sicherungsbügel elastisch sind.

9. Kupplungseinrichtung nach einem der vorangegangenen Ansprüche, **dadurch gekennzeichnet, dass** die Sicherungsbügel als elastische Federzungen ausgebildet sind und beim Einstecken der Rohrleitung in Einsteckrichtung durch den Sicherungsbund von einer Sicherungsstellung, in der der Sicherungsbund entgegen der Einsteckrichtung mit dem Sicherungsbügel in Eingriff bringbar ist, in eine Durchlassstellung überführbar sind, so dass das Rohr in die Aufnahme einsteckbar ist.

10. Kupplungseinrichtung nach einem der vorangegangenen Ansprüche, **dadurch gekennzeichnet, dass** die Sicherungseinrichtung aus federelastischem Material, vorzugsweise Federstahl besteht.

11. Kupplungseinrichtung nach einem der vorangegangenen Ansprüche, **dadurch gekennzeichnet, dass** das Gehäuse einen die Aufnahme aufweisenden Gehäuseabschnitt größeren Außendurchmessers und einen Gehäuseabschnitt geringeren Außendurchmessers aufweist.

12. Kupplungseinrichtung nach einem der vorangegangenen Ansprüche, **dadurch gekennzeichnet, dass** der Gehäuseabschnitt größeren Außendurchmessers dem Gehäuseabschnitt geringeren Außendurchmessers benachbart angeordnet ist.

13. Kupplungseinrichtung nach einem der vorangegangenen Ansprüche, **dadurch gekennzeichnet, dass** die Sicherungseinrichtung einen zweiten Befestigungsabschnitt aufweist, der am Gehäuse angebracht ist.

14. Kupplungseinrichtung nach einem der vorangegangenen Ansprüche, **dadurch gekennzeichnet, dass** der erste Befestigungsabschnitt am Gehäuseabschnitt kleineren Außendurchmessers und der zweite Befestigungsabschnitt am Gehäuseabschnitt größeren Außendurchmessers angeordnet sind.

15. Kupplungseinrichtung nach einem der vorangegangenen Ansprüche, **dadurch gekennzeichnet, dass** der erste und der zweite Befestigungsabschnitt über wenigstens einen Haltesteg miteinander verbunden sind, der sich am Gehäuse entgegen der Einsteckrichtung abstützt.

16. Kupplungseinrichtung nach einem der vorangegangenen Ansprüche, **dadurch gekennzeichnet, dass** der zweite Befestigungsabschnitt einen Stützabschnitt aufweist, der das Gehäuse formschlüssig hintergreift, so dass sich die Sicherungseinrichtung in Einsteckrichtung am Gehäuse abstützt.

17. Kupplungseinrichtung nach einem der Ansprüche 1 bis 16, **dadurch gekennzeichnet, dass** ein zylindrischer Endabschnitt der Rohrleitung größer als die axiale Bewegung der Rohrleitung zwischen eingesteckter Stellung und der Sicherungsstellung ist.
